Europäisches Patentamt

European Patent Office

Office européen des brevets

(11) Publication number: **0 217 477**
**A1**

## (12) EUROPEAN PATENT APPLICATION

(21) Application number: 86201691.2

(22) Date of filing: 01.10.86

(51) Int. Cl.⁴: **B01J 2/00** , **B01J 2/12**

(30) Priority: 02.10.85 NL 8502686

(43) Date of publication of application:
08.04.87 Bulletin 87/15

(84) Designated Contracting States:
AT BE CH DE ES FR GB GR IT LI NL SE

(71) Applicant: STAMICARBON B.V.
Mijnweg 1
NL-6167 AC Geleen(NL)

(72) Inventor: Van der Leek, Johannes Hubertus
Karel Doormanstraat 21
NL-6443 SB Brunssum(NL)
Inventor: Mutsers, Stanislaus Martinus Petrus
Eindstraat 9
NL-6166 EH Geleen(NL)

(74) Representative: Hoogstraten, Willem Cornelis
Roeland et al
OCTROOIBUREAU DSM Postbus 9
NL-6160 MA Geleen(NL)

(54) Process for preparing granules and granules obtained by applying this process.

(57) Strong and round granules are prepared in an easily controllable and efficient granulating process, wherein in a granulation zone, a liquid composition is distributed over solid particles and granules are withdrawn from said granulation zone, by splitting up the flow of granules withdrawn from the granulation zone into a flow of undersize granules, a flow of smaller on-size granules, a flow of larger on-size granules and a flow of oversize granules, along (11), (14) to the granulation zone, at least in part, the flow of smaller on-size granules optionally together with the flow of undersize granules and/or the flow of crushed oversize granules.

# PROCESS FOR PREPARING GRANULES AND GRANULES OBTAINED BY APPLYING THIS PROCESS

The invention relates to a process for preparing granules having a grain size between given limits by distributing in a granulating zone a liquid composition over solid particles, withdrawing from the granulating zone a flow of granules, splitting this flow of granules up into flows of oversize granules, undersize granules and on-size granules, crushing the oversize granules and subsequently returning these at least in part to the granulating zone along with the undersize granules and carrying off, at least in part the on-size granules.

It is known, see for instance Chemical Engineering World, vol. XIII No. 6 (1978) pages 31-40, to split the flow of granules that comes from the granulating zone in a screening section into a flow of on-size granules, a flow of oversize granules and a flow of undersize granules, to crush the oversize granules, possibly together with a part of the on-size granules, and subsequently to return these together with the undersize granules to the granulating zone. This process generally has the disadvantage that the resulting granules are not round enough.

In the US patent specification 3,516,813 a granulating process is described for the purpose of obtaining strong and round granules, in which process the flow of granules from the granulating zone is split up into 5 flows and in which process the granules smaller than the desired product are distributed over three flows with different sizes: fine particles, intermediate size particles and nuclei particles, which are returned back partly after crushing, to the granulating zone. It is essential in this said process for at least 50% (wt) nuclei particles to be present in the return flow to the granulating zone, for less than 30% (wt) fine particles to be present everywhere in the process and for only a limited amount of intermediate size particles to be returned to the granulating zone.

This process, however, is highly complicated and difficult to control, which is important notably in view of the strict requirements which the composition of the return flow to the granulating zone must comply with. The object of the invention is to provide a process for preparing granules which is easy to control and which yet produces strong and round granules without lowering the granulating efficiency.

This is achieved according to the invention in that the flow of granules withdrawn from the granulating zone is split up into a flow of undersize granules, a flow of smaller on-size granules, a flow of larger on-size granules and a flow of oversize granules, the flow of smaller on-size granules being recirculated at least in part to the granulating zone and the flow of larger on-size granules being carried off as product, optionally together with the portion of the flow of smaller on-size granules that is not recirculated to the granulating zone.

The fact is that it has surprisingly been found that by splitting the flow of on-size granules into a flow of smaller on-size granules and a flow of larger on-size granules in, for instance, a screening section containing, in addition to the usual fine screen and coarse screen, an intermediate screen as well and by returning the smaller on-size granules at least in part to the granulating zone usually smoother and rounder granules are obtained with a higher bulk density, while, despite the return of on-size particles, the granulating efficiency is not reduced and ofter even increased.

In addition, it has been found that also the moisture content of the granules is lower, as a result of which the caking tendency of the granules is reduced so that less coating agent need be applied, which involves a saving of costs. This effect is even strengthened by the smoother and rounder surface of the granules.

The process according to the invention can be applied with great advantage in processes in which conglomeration-granulation takes place, such as in pan granulation, screw granulation or drum granulation. In this type of granulators in particular a substantial improvement of the quality of the granules is achieved when applying the process according to the invention.

The grain size distribution of the granules that can be carried off as product must comply with certain product requirements. Notably, the product flow may contain only a limited amount of granules smaller than a given minimum limiting value and a limited amount of granules larger than a given maximum limiting value. In so far as fertilizers are concerned, generally minimum limiting value of about 2 mm must be observed and a maximum limiting value of about 4 mm. It is customary for the chosen mesh size of the fine screen in the screening section to be as small as possible, within the specified product requirements, and for the chosen mesh size of the coarse screen to be as large as possible. In so far as fertilizers are concerned, this mostly means a fine screen with a nominal mesh of 2.0 to 2.5 mm and a coarse screen with a nominal mesh of 4.0 to 4.5 mm.

The $d_{50}$ of a flow of granules is understood to mean the weight-average diameter, so that the total weight of the granules having a diameter larger than the weight-average diameter equals half of the total weight of all granules.

The $d_{50}$ of the flow of granules from the granulator can, for instance, be influenced by varying the moisture content of the liquid composition supplied to the granulator, or by varying the temperature of the granules returned to the granulating zone. The chosen process conditions are preferably such that the $d_{50}$ of the flow of granules from the granulator approximately equals the linear average of the minimum and maximum limiting values of the grain size of the product.

The chance of a particle falling through the screen decreases as the particle becomes larger. The nominal mesh of the screen equals to the particle diameter at which a particle with that diameter stands a 50% chance of falling through the screen.

Generally, the chosen nominal mesh of the intermediate screen about equals the $d_{50}$ of the flow of granules that comes from the granulator. Using, if so desired, a distributing device, for instance a rotating distributor, the flow of smaller on-size granules is split up into two flows of granules, one of which is returned to the granulating zone and the other is carried off as good product. Preferably as large a portion of the flow of smaller on-size granules as possible is returned to the granulating zone. By varying the amount of smaller on-size granules to be returned to the granulating zone it is possible to control the course of the process in the granulator. However, to the amount of on-size granules to be recycled a limit has been set above which the granulating efficiency decreases. The fact is that it has been found that, when the nominal mesh of the intermediate screen is a few tenths of a millimetre greater than the $d_{50}$ of the flow of granules from the granulating zone, the smaller on-size granules can usually not all of them be recycled to the granulating zone without a decrease of the granulating efficiency.

Usually the total flow of smaller on-size granules can be recycled, with virtually maximum granulating efficiency, to the granulating zone. This can virtually always be achieved when the chosen nominal mesh of the intermediate screen is a few tenths of a millimetre, generally less than 0.5 millimetre, smaller than the $d_{50}$ of the flow of granules that comes from the granulating zone. The advantage hereof is that the grain size distribution of the product flow is smaller. Moreover, with such a choice of the nominal mesh of the intermediate screen or of the process conditions, the distributing device in the flow of smaller on-size granules can be dispensed with, so that a simplified granulator will suffice. However, as a result the possibility of controlling the granulating process by regulating the distributing device will be lost.

Therefore, the screening section is preferably so designed that the separation between the larger on-size granules and the smaller on-size granules is momentary and virtually continuously variable, so that the spread of the resulting grain size distribution of the product flow is as small as possible, while yet the possibility remains of controlling the process.

This can be realized, for instance, by means of a shaker screen whose intermediate screen has a mesh which gradually increases into the direction of transport and the bottom of which is fitted with a mechanism by which the granules falling through the screen are collected according to momentarily adjustable grain size fractions. Suitable for this purpose is, for instance, a shaker screen provided with four outlets with an adjustable valve placed between the second and the third outlet and with the screen decks over the second and third outlets near the valve having a gradually increasing mesh.

In a further simplified embodiment of the process according to the invention the undersize granules and the smaller on-size granules are no longer split off in the screening section separately, but jointly. Under certain conditions, for instance when stable processing conditions can easily be realized, this embodiment may be preferred despite the disadvantage of reduced flexibility.

In principle all kinds of liquid materials in the form of a solution, melt or suspension can be used. Examples of materials to be granulated are ammonium salts, such as ammonium nitrate, ammonium sulphate, or ammonium phosphate, as well as mixtures hereof, straight fertilizers, such as calcium ammonium nitrate, magnesium ammonium nitrate, compound NP and NPK fertilizers, urea and urea-containing compositions, sulphur, organic substances, such as bisphenol and caprolactam, and the like.

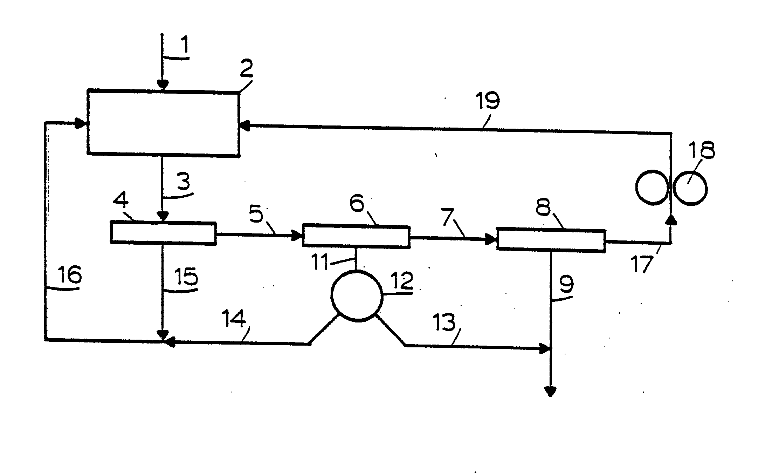

The invention will be elucidated with reference to the drawing.

In granulator 2 a liquid composition supplied along 1 is distributed over an amount of solid particles that are kept moving, for instance in a rotating drum. The coarse product from the granulator is passed along 3 over a fine screen 4, subsequently along 5 over an intermediate screen 6 and along 7 over a coarse screen 8, upon which the flow of oversize granules is returned along 17, crusher 18 and 19 to the granulator. The flow of undersize granules that comes from the fine screen is returned along 15 and 16 direct to the granulator.

Optionally the intermediate screen or the fine and intermediate screens jointly can be replaced by one screen, for instance a shaker screen whose mesh gradually increases into the direction of transport and at the bottom of which a mechanism has been fitted by which the granules falling through the screen are collected according to momentarily adjustable grain size fractions.

From intermediate screen 6 and coarse screen 8 on-size granules are carried off along 11, respectively 9. The flow of smaller on-size granules carried off along 11 is optionally split up in a distributor 12 into two flows, one of which is carried off as product along 13 together with the flow of larger on-size granules carried off along 9 and the other is recycled to the granulator along 14 together with the undersize granules along 16.

The invention will now be further elucidated by means of the following examples without being limited to the modes of realization described.

Comparative example 1

Starting from a nitrophosphate melt, NP 23 + 23 granules were prepared in a screw granulator.

The requirements regarding the size of the end product were:

$d_{gr} \leq 0.5$ mm virtually absent

$d_{gr} \leq 2.0$ mm maximum 2% (wt)

2.0 mm $\leq d_{gr} \leq 4.0$ mm about 90% (wt)

$d_{gr} \geq 4.0$ mm maximum 10% (wt)

$d_{gr} \geq 4.75$ mm virtually absent.

In order to obtain a product that complied with these requirements a fine screen with a nominal mesh of 2.4 mm and a coarse screen with a nominal mesh of 4.25 mm where laid in a vibrating screen. The $d_{so}$ of the granulate from the screw granulator was 3.25 mm.

A product was obtained having a rolling capacity of 15% determined as the percentage of granules of the granules with a diameter larger than 1.4 mm rolling down on a plate placed at an angle of 7.5¤ with the horizontal plane and rotating at a speed of 16 min⁻¹, and a bulk density of 890 kg/m³ determined by metering the granular mass from the standardized funnel mounted at standard height over a standardized vessel with a capacity of 1 litre to the vessel and subsequently determining the mass of the contents of the vessel. The efficiency expressed as a percentage of the granulate from the screw granulator carried off as good product was 23% (wt). The moisture con tent of the product was 0.85% (wt). The coating agent applied was a mixture of oil, fatty amine and polyoxalkylates. The amount required was 0.25% (wt).

Example I

In the vibrating screen an intermediate screen with a nominal mesh of 3.5 mm was placed between the fine screen and the coarse screen. Of the smaller on-size granules screened off by means hereof an average of 65% (wt) was returned to the granulator by means of a rotating distributor. The $d_{so}$ was again 3.25 mm.

A product was obtained having a rolling capacity of 55% and a bulk density of 965 kg/m³. The efficiency was 26%. The moisture content of the end product was 0.70% (wt), so that only 0.15% (wt) coating agent had to be applied.

Comparative example 2

In a drum granulator NP 20 + 20 granules were prepared. The size of the end product had to meet the same requirements as in example 1. Consequently, in the vibrating screen a fine screen and a coarse screen were used having the same nominal mesh as in example 1. The $d_{so}$ of the granulate from the drum granulator was 3.25 mm.

A product was obtained having a rolling capacity of 25% and a bulk density of 990 kg/m³. The efficiency was 25%. The moisture content of the end product was 0.87%, so that 0.23% (wt) coating agent had to be applied. The coating agent was of the same composition as in example 1.

Example II

Into the vibrating screen an intermediate screen with a nominal mesh of 3.0 mm was placed. The flow of smaller on-size granules was returned to the granulator completely. The $d_{so}$ of the granulate from the drum granulator was again 3.25 mm.

A product was obtained having a rolling capacity of 65% and a bulk density of 1050 kg/m³. The efficiency was 28%. The moisture content of the end product was 0.72% (wt), so that 0.15% (wt) coating agent had to be applied.

Comparative example 3

In a screw granulator CAN was granulated with dolomite as filler and with 26% (wt) nitrogen.

The requirements regarding the size of the end product were:

$d_{gr} \leq 0.5$ mm virtually absent

$d_{gr} \leq 2.0$ mm maximum 2% (wt)

$2.0$ mm $\leq d_{gr} \leq 4.0$ mm about 95% (wt)

$d_{gr} \geq 4.0$ mm maximum 5% (wt)

$d_{gr} \geq 4.75$ mm virtually absent.

In order to obtain a product that complied with these requirements, a fine screen having a nominal mesh of 2.4 mm and a coarse screen having a nominal mesh of 4.4 mm were laid into a shaking screen. The $d_{50}$ of the granulate from the screw granulator was 3.1 mm.

A product was obtained having a rolling capacity of 55% and a bulk density of 960 kg/m³. The efficiency was 35%. The moisture content of the end product was 0.40% (wt), so that 0.28% (wt) coating agent had to be applied. The coating agent consisted of a mixture of 10% (wt) fatty amine and 90% (wt) oil.

Example III

Into a shaking screen provided with four outlets an intermediate screen having a nominal mesh of 3.2. mm was laid. Of the smaller on-size granules screened off by means hereof an average of 80% - (wt) was recirculated to the granulator by means of a rotating distributor. The $d_{50}$ was again 3.1 mm.

A product was obtained having a rolling capacity of 80% and a bulk density of 985 kg/m³. The efficiency was 39%. The moisture content of the end product was 0.25% (wt), so that 0.24% (wt) coating agent had to be applied.

Claims

1. Process for preparing granules having a grain size between given limits by distributing in a granulating zone a liquid composition over solid particles, withdrawing from the granulating zone a flow of granules, splitting this flow of granules up into flows of oversize granules, undersize granules and on-size granules, crushing the oversize granules and subsequently returning these at least in part to the granulating zone along with the undersize granules and carrying off, at least in part, the on-size granules, the process being characterized in that the flow of granules withdrawn from the granulating zone is split up into a flow of undersize granules, a flow of smaller on-size granules, a flow of larger on-size granules and a flow of oversize granules, the flow of smaller on-size granules being recirculated at least in part to the granulating zone and the flow of larger on-size granules being carried off as product, optionally together with the portion of the flow of smaller on-size granules that is not recirculated to the granulating zone.

2. Process according to claim 1, characterized in that conglomeration granulation is applied.

3. Process according to claim 1 or 2, characterized in that the screen mesh in the split-up of the flow of on-size granules into a flow of smaller on-size granules and larger on-size granules is about equal to the $d_{50}$.

4. Process according to claim 1 or 2, characterized in that the screen mesh in the split-up of the flow of on-size granules into a flow of smaller on-size granules and a flow of larger on-size granules is equal to or up to 0.5 mm smaller than the $d_{50}$.

5. Process according to claim 4, characterized in that the flow of smaller on-size granules is returned to the granulating zone completely.

6. Process according to claim 5, characterized in that the screen mesh in the split-up between the smaller on-size granules and the larger on-size granules can be varied momentarily and virtually continuously.

7. Process according to claim 5 or 6, characterized in that the flow of granules that comes from the granulating zone is split up into a flow of granules comprising the undersize granules and the smaller on-size granules, a flow of larger on-size granules and a flow of oversize granules.

**European Patent Office**

**EUROPEAN SEARCH REPORT**

Application number

EP 86 20 1691

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| D,X | US-A-3 516 813 (B.G. SMITH)<br>* Column 2, line 12 - column 3, line 57; figures 1-3 * | 1,2 | B 01 J 2/00<br>B 01 J 2/12 |
| A | FR-A-2 132 145 (CHEMIEBAU DR. A. ZIEREN GmbH)<br>--- | | |
| A | GB-A-2 129 702 (K.H. WALTER)<br>----- | | |

|  | TECHNICAL FIELDS SEARCHED (Int. Cl.4) |
|---|---|
|  | B 01 J |

The present search report has been drawn up for all claims

| Place of search | Date of completion of the search | Examiner |
|---|---|---|
| THE HAGUE | 17-11-1986 | PYFFEROEN K. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82